# EUROPEAN PATENT SPECIFICATION

(11) **EP 1 179 762 B1**
(45) Date of publication and mention of the grant of the patent: **11.06.2003**
(21) Application number: 01121145.5
(22) Date of filing: 21.11.1996
(51) Int. Cl.: G05G 1/14

(54) **Adjustable pedal assembly**
Positionierbare Pedaleinheit
Ensemble de pédales réglabes en position

(30) Priority: 02.10.1996 US 720682; 31.10.1996 US 741981
(43) Date of publication of application: 13.02.2002
(62) Divisional of application: 96940581.0
(73) Proprietor: Comcorp Technologies, Inc., Warren, MI 48089 (US)
(72) Inventor: Rixon, Christopher J., Techumseh, Ontario N8N 4J7 (CA); Bortolon, Christopher, Clawson, Michigan 48017 (US)
(74) Representative: Wharton, Peter Robert

(56) References cited:
- US-A- 4 875 385
- US-A- 5 408 899
- US-A- 5 632 183
- US-A- 5 697 260

## Description

### Background of the Invention

This invention relates to control pedal apparatuses and more particularly to adjustment means for selectively adjusting the position of one or more of the control pedals of a motor vehicle.

In a conventional automotive vehicle pedals are provided for controlling brakes and engine throttle. If the vehicle has a manual transmission a clutch pedal is also provided. These pedals are foot operated by the driver. In order for the driver to maintain the most advantageous position for working these control pedals the vehicle front seat is usually slidably mounted on a seat track with means for securing the seat along the track in a plurality of adjustment positions.

The adjustment provided by moving the seat along the seat track does not accommodate all vehicle operators due to differences in anatomical dimensions. Further, there is growing concern that the use of seat tracks, and especially long seat tracks, constitutes a safety hazard in that the seat may pull loose from the track during an accident with resultant injuries to the driver and/or passengers. Further, the use of seat tracks to adjust the seat position has the effect of positioning shorter operators extremely close to the steering wheel where they are susceptible in an accident to injury from the steering wheel or from an exploding air bag. It is therefore desirable to either eliminate the seat track entirely or shorten the seat track to an extent that it will be strong enough to retain the seat during an impact. Shortening or eliminating the seat track requires that means be provided to selectively move the various control pedals to accommodate various size drivers.

Various proposals were made over a period of many years to provide selective adjustment of the pedal positions to accommodate various size drivers but none of these proposals met with any significant commercial acceptance since the proposed mechanisms were unduly complex and expensive and/or were extremely difficult to operate and/or accomplished the required pedal adjustment only at the expense of altering other critical dimensional relationship as between the driver and the various pedals. Recently a control pedal mechanism has been developed which is simple and inexpensive and easy to operate and that accomplishes the required pedal adjustment without altering further critical dimensional relationships as between the driver and the various pedals. This control pedal mechanism is disclosed in U.S. Patent Nos. 4,875,385; 4,989,474 and 5,078,024 all assigned to the assignee of the present application. The present invention represents improvements to the basic adjustable control pedal design disclosed in these patents.

### Summary of the Invention

This invention is directed to the provision of a simple, inexpensive and effective apparatus for adjusting the control pedals of a motor vehicle.

This invention adjustable pedal apparatus is intended for use with any of the control pedals of a motor vehicle and provides a simple and effective means of adjusting the position of the pedal to match the particular anatomical dimension of the operator.

The invention is directed to the provision of an adjustable electronic pedal assembly that is especially suitable for use in conjunction with a drive-by-wire throttle control.

The invention definded by claim 1 provides a simple and effective means of generating an electronic control signal on an adjustable pedal assembly and ensures that the ergonomics of the control pedal will not vary irrespective of the position of adjustment of the pedal structure.

According to the invention, the customary pivotal movement of the control pedal is retained and also the constant ergometric operation of the control pedal assembly is maintained.

According to an embodiment of the invention, the generator means includes a potentiometer mounted on the carrier whose setting is varied in response to pivotal movement of the pedal structure on the carrier. This specific arrangement provides a simple and effective means of generating the required electronic signal to provide drive-by-wire operation.

According to a further embodiment of the invention, the pedal assembly further includes a coil spring arranged to be torsionally tightened in response to a force applied to the pedal pad, whereby to provide a spring resistance force opposing the pedal apply force, and arranged to be torsionally relaxed in response to release of the pedal apply force, whereby to provide a spring return force, and the pedal assembly further includes means operative in response to torsional tightening of the spring to generate a frictional resistance force that is additive with respect to the spring resistance force and subtractive with respect to the spring return force. This arrangement provides an effective means of providing the desired feel or feedback to the operator upon movement of the pedal and further provides the desired hysteresis effect.

According to a further embodiment of the invention, the generator means comprises a potentiometer whose setting is varied in response to rotary movement of the pivot shaft of the pedal structure. The use of the pivot shaft of the pedal structure as an input shaft -for the potentiometer further simplifies and compacts the pedal assembly structure.

### Brief Description of the Drawings

FIGURE 1 is an exploded perspective view of a first embodiment of an adjustable brake pedal assembly not in accordance with the invention;
FIGURE 2 is a longitudinal cross-sectional view of the brake pedal assembly;
FIGURE 3 is a cross-sectional view taken on lines 3-3 Figure 2;
FIGURE 4 is a front view of the brake pedal assembly;
FIGURE 5 is a fragmentary cross-sectional view of the brake pedal assembly;
FIGURE 6 is a perspective, somewhat schematic view of the brake pedal assembly shown in conjunction with an accelerator pedal assembly;
FIGURE 7 is a detail view of a portion of the accelerator pedal assembly;
FIGURE 8 is a circuit diagram for use with adjustable pedal assemblies;
FIGURE 9 is a side elevational view of an accelerator pedal assembly according to a second embodiment which is in accordance with the invention;
FIGURE 10 is a rear view of the accelerator pedal assembly;
FIGURE 11 is a partially exploded view of the accelerator pedal assembly;
FIGURE 12 is a perspective view of a sub assembly of the accelerator pedal assembly;
FIGURES 13 and 14 are cross-sectional views of the accelerator pedal assembly;
FIGURE 15 is a detail view of a section of a housing employed in the accelerator pedal assembly;
FIGURES 16, 17 and 18 are schematic views illustrating the manner in which the invention accelerator pedal assembly operates to generate a hysteresis effect.

### Detailed Description of the Preferred Embodiments

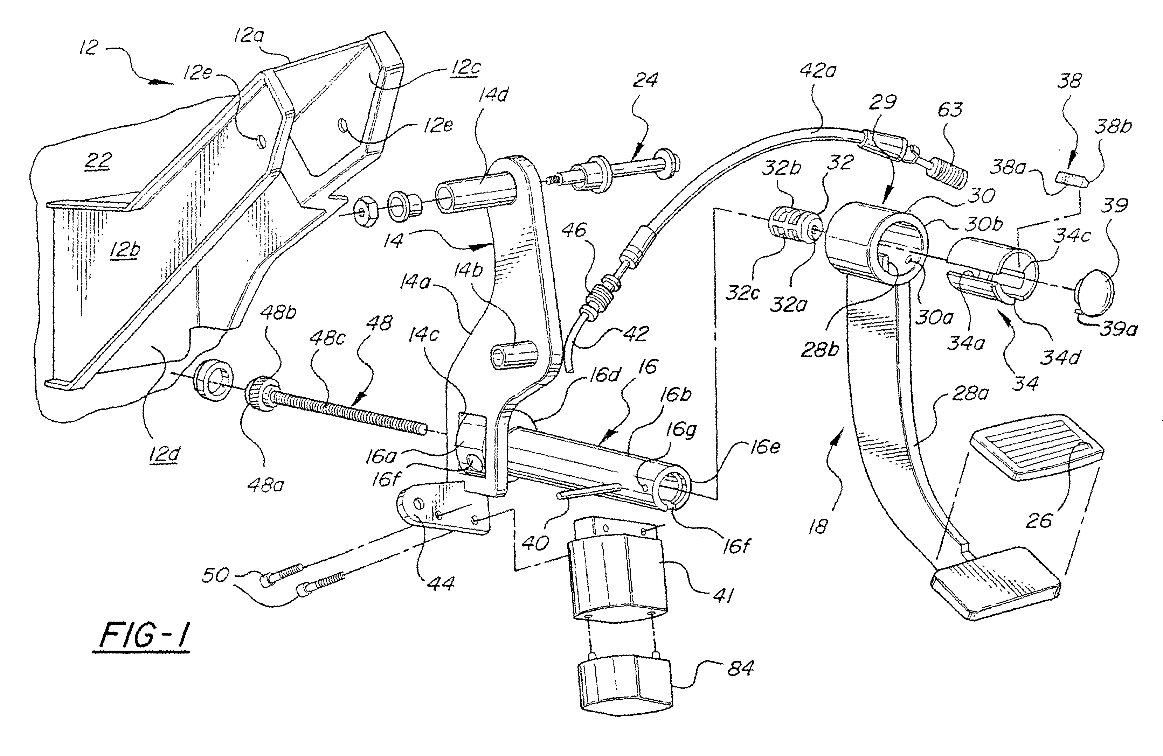

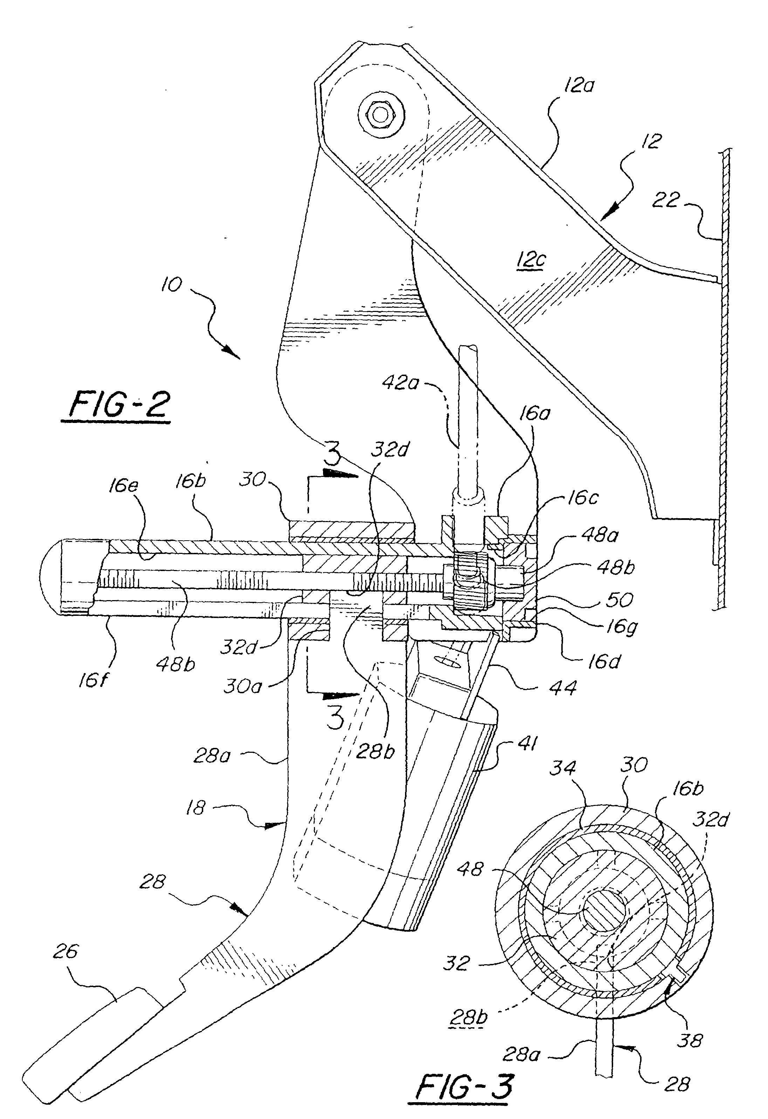

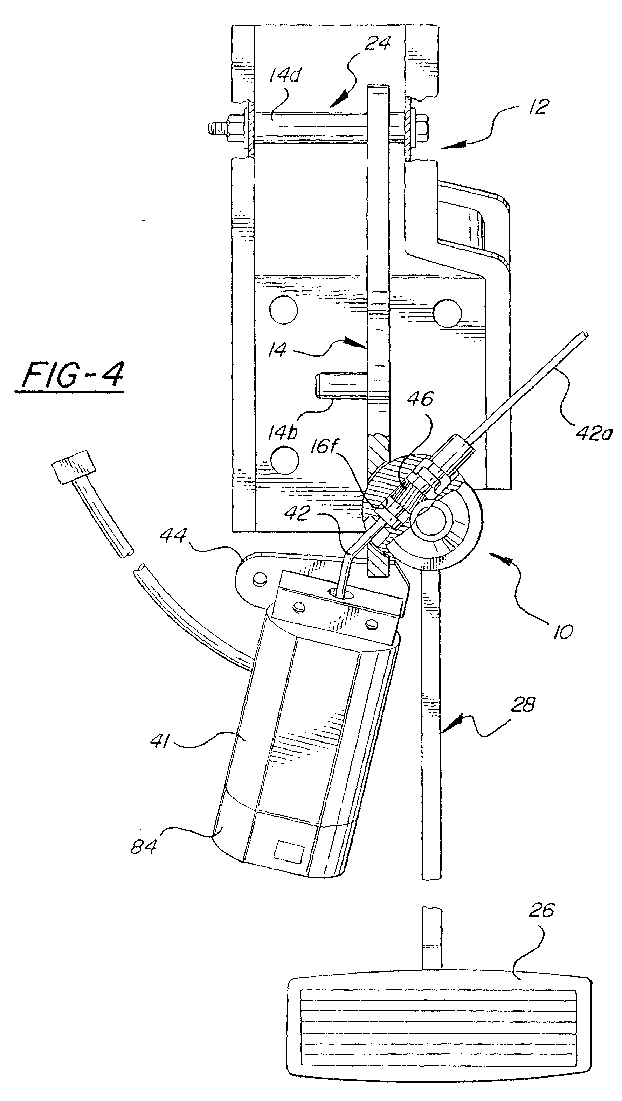

The brake pedal assembly of the first embodiment includes (Figures 1-5) a mounting bracket 12, a pivot arm 14, a guide rod structure 16, a pedal assembly 18, and a drive assembly 20. Mounting bracket 12 may be formed of any suitable sheet metal material in a suitable stamping operation and is intended for suitable securement to the firewall 22 of the associated motor vehicle. Bracket 12 includes a top wall 12a, laterally spaced upwardly extending side walls 12b and 12c, and a front wall 12d.

Pivot arm 14 includes a main body portion 14a, a brake rod attachment pivot 14b for attachment of a brake actuator rod, a lower window 14c, and an upper spacer hub structure 14d. Pivot arm 14 is pivotally mounted at its upper end between bracket side walls 12b and 12c by a screw and bushing assembly 24 positioned in bracket apertures 12e.

Guide rod structure 16 has an elongated, circular, tubular configuration and includes a forward transmission housing portion 16a and a shaft portion 16b.

Transmission housing portion 16a is enlarged relative to shaft portion 16b and defines a central bore 16c opening at the forward end 16d of the rod structure.

Shaft portion 16b extends rigidly rearwardly from transmission housing portion 16a, defines a central bore 16e coincident with bore 16c, is open at its rear end 16e, and includes a bottom axial slot 16f. Slot 16f extends forwardly from a location proximate transmission housing portion 16a and opens at the front end 16e of the shaft portion.

Pedal assembly 18 includes a pedal pad 26, a pedal arm 28 carrying the pedal pad 26 at its lower end, and an upper guide structure 29.

Pedal arm 28 includes a main body portion 28a and a reduced width upper end portion 28b.

Upper guide structure 29 includes a hub structure 30 and a nut 32. The reduced width upper end portion 28b of the pedal arm passes upwardly through a bottom slot 30a in hub structure 30 to position upper end portion 28b in the hollow of the hub structure whereafter the pedal arm and hub are welded together to form a unitary pedal arm/hub assembly.

Hub structure 30 is sized to be slidably mounted on rod structure shaft portion 16b with the aid of a split bushing 34 positioned within the hub structure. Hub structure 30 and bushing 34 will be seen to coact to define a smooth guide bore slidably receiving rod structure shaft portion 16b whereby to enable the pedal assembly to move smoothly axially forwardly and rearwardly with respect to the rod structure.

Nut 32 may be formed of plastic, has a circular cross-sectional configuration, is sized to fit slidably within the bore 16a of the rod structure shaft portion, and includes a threaded central bore 32a. Nut 32 may include axial and circumferential ribs 32b, 32c to minimize weight and minimize sliding friction between the nut and the rod shaft portion.

Nut 32 is positioned on the upper end of pedal arm 28 with the reduced width upper end portion 28b nested in a downwardly opening slot or pocket 32d in the bottom of the nut.

Bushing 34, in addition to split 34a, includes an axially extending slot 34b and a window 34c. Slot 34b accommodates the pedal arm upper end portion 28b and window 34c accommodates a leaf spring 38 (Figures 1, 3 and 5).

Leaf spring 38 includes a main body portion 38a positioned in window 34c and end tab portions 38b positioned in axially spaced apertures 30a in hub structure 30. With tabs 38b positioned in apertures 30a, main body portion 38a of the spring is positioned within and passes through window 34c to act against rod shaft portion 16b at the interface between the rod shaft portion and bushing 34.

The open rear end 16e of the rod structure is closed by a disc-shaped nose piece 39 which fits over the open rear end of the rod structure and is held in place by a rolled pin 40 passing through diametrically opposed apertures 16g in the rear end of the rod structure and through apertures in diametrically opposed lugs 39a on nose piece 39.

Drive assembly 20 includes a motor 41, a Bowden cable 42, a bracket 44, a worm gear 46, and an elongated drive member 48.

Motor 41 comprises a small electric DC motor of known form.

Bracket 44 is fixedly secured to the lower end of pivot arm 14 and mounts motor 41 utilizing suitable thread cutting screws 50.

Worm gear 46 is journaled in a chordal bore 16f in transmission housing 16a.

Cable 42 is driven by the output shaft of motor 41 and drivingly engages worm gear 46 whereby energization of the motor rotates worm gear 46.

Elongated drive member 48 includes a forward journal portion 48a, a worm wheel portion 48b, and a rearwardly extending screw shaft portion 48c.

Drive member 48 is positioned in the hollow of rod structure 16 with forward journal portion 48a journaled in a retainer 50 suitably positioned in a counterbore 16g in the open front end of the rod structure, worm wheel 48b drivingly engaging worm gear 46, and screw shaft portion 48 threadably engaging nut 32a so that energization of motor 41 has the effect of sliding nut 32 forwardly and rearwardly within bore 16e whereby to adjust pedal assembly 18 forwardly and rearwardly along the rod structure.

To assemble the pedal apparatus, a weldment is formed by welding the transmission portion 16a of the rod structure within the window 14c of the pivot arm 14 and welding the motor bracket 44 to the lower end of the pivot arm; the weldment is mounted on bracket 12 using bolt assembly 24; the upper end 28b of pedal arm 28 is moved upwardly through the slot 30a in the hub 30 and welded in position; nut 32 is positioned on top of pedal arm portion 28b; spring 38 is positioned on the inner periphery of the hub 30 with end tabs 38b positioned in apertures 30a; bushing 34 is installed in hub 30 by pushing the bushing rearwardly into the hub with slot 34b aligning with and moving around pedal arm upper portion 28b, window 34c moving into position over spring 38, and flange 34d on the rear end of the bushing coacting with the rear end 30b of the hub to preclude forward movement of the bushing relative to the hub and upper pedal arm portion 28b coacting with slot 34b to preclude rearward movement of the bushing relative to the hub; the pedal assembly is offered up to rod structure 16 with the hub 30 slipping over the outer periphery of shaft portion 16b of the rod structure, upper pedal arm portion 28b moving into slot 16f, and nut 32 moving to a nested position within the hollow of shaft portion 16b; drive member 48 is inserted into the forward end of the rod structure to threadably engage screw shaft portion 48c with nut 32; drive member 48 is spun manually to move nut 32 to a desired axial position within the rod structure; retainer 50 is positioned within counterbore 16g in the forward end of the rod structure to journal the journal portion 48a of the drive member whereafter the retainer is held in position either by a snap ring or by suitable peening; worm gear 46 is positioned in bore 16f in driving engagement with worm wheel portion 48b of the drive member 48; nose piece 39 is positioned on the rearward end of the rod structure utilizing roll pin 40; motor 41 is mounted on motor bracket 44 utilizing thread cutting screws 50; and cable 42 is drivingly interconnected between the output of the motor and worm gear 46.

The brake pedal assembly is now ready for delivery to a motor vehicle manufacturer whereat installation in the motor vehicle is accomplished simply by securing bracket 12 to the firewall of the vehicle and attaching the brake actuator rod 49 of the motor vehicle to pivot 14b.

In operation, the position of the brake pad 26 relative to the driver's seat 50 of the motor vehicle and relative to the operator is selectively adjusted by selectively energizing motor 41 to selectively move nut 32 forwardly and rearwardly within the bore 16e of rod structure 16 and thereby, via the driving interconnection between the nut and the pedal assembly, move the pedal assembly selectively forwardly and rearwardly along the rod structure.

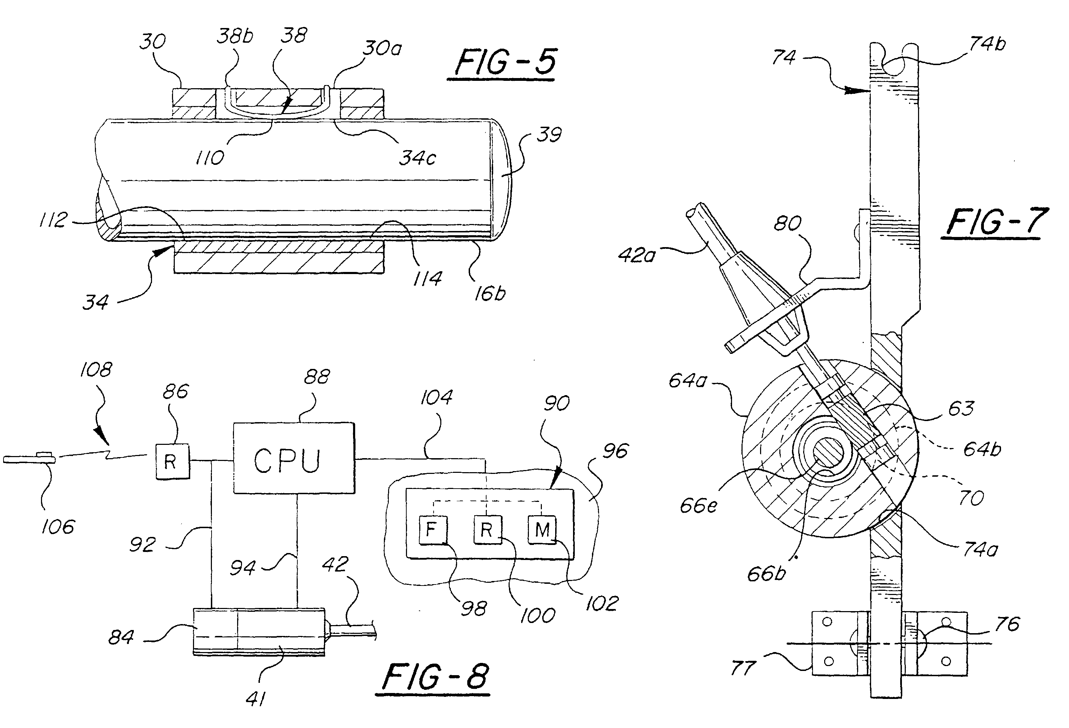

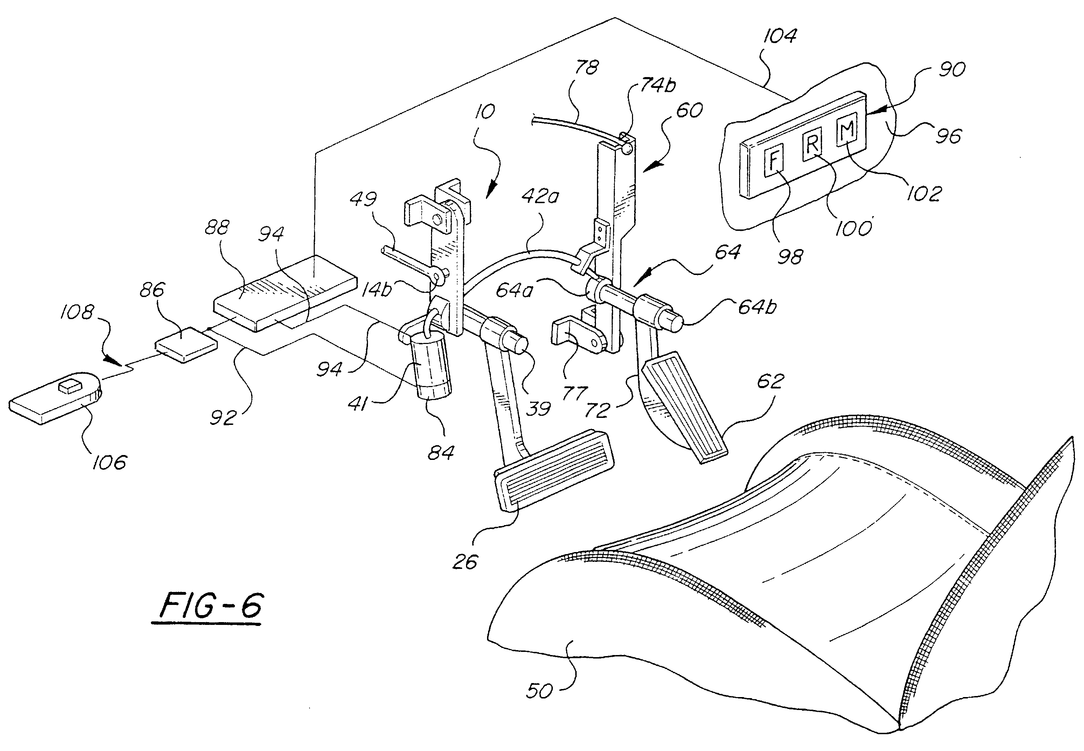

As seen in Figure 6, the adjustable brake pedal apparatus 10 may be adjusted in conjunction with an adjustable accelerator pedal control apparatus 60 so that the brake pad 26 of the brake pedal apparatus and the accelerator pad 62 of the accelerator pedal apparatus are moved simultaneously. This may be accomplished as seen in Figure 5 by extending the cable 42 from the brake pedal control apparatus 10 to the accelerator control apparatus 60 with the extended cable 42a driving a worm gear 63 journaled in the transmission housing portion 64a of the guide rod structure 64 of the accelerator pedal mechanism to drive the worm wheel portion 66b of an elongated drive member 66 positioned within the guide rod structure 64 and including a screw shaft portion 66c for engagement with the nut 70 positioned within the shaft portion 64b of rod structure 64 to move the accelerator pedal arm 72 forwardly and rearwardly along the rod structure, all in the manner previously described with respect to brake pedal assembly 10.

Transmission housing portion 64a of guide rod structure 64 is weldingly positioned in a window 74a formed in a pivot arm 74 mounted for pivotal movement at its lower end about a pivot axis 76 defined by a mounting bracket 77 secured to the vehicle firewall. Pivot arm 74 includes a cable attachment structure 74b at its upper end for attachment of an accelerator cable 78 and the apparatus further includes a cable bracket 80 secured to pivot arm 74 and operative to mount cable extension 42a in an manner to facilitate the driving connection of the cable extension to worm gear 63.

With the arrangement seen in Figure 6, energization of the single motor 41 associated with the brake pedal assembly 10 has the effect of simultaneously adjusting both the brake pedal pad 26 and the accelerator pedal pad 62.

A control circuit for motor 41 is seen in Figures 6 and 8 where the control circuit, in addition to motor 41, includes a potentiometer module 84, a receiver 86, a CPU or microprocessor 88, and a control panel 90.

Potentiometer 84 attaches to the end of motor 41 remote from the motor output shaft and functions to count the revolutions of the motor and generate a signal on lead 92 indicative of the number of counted motor revolutions.

CPU 88 may comprise an existing computer already on board the vehicle. CPU 88 receives motor shaft position information from potentiometer 84 via line 92 and controls motor 41 via a lead 94.

Control panel 90 may be positioned in the instrument panel 96 of the vehicle at a location convenient to an operator positioned on seat 50 and may include a forward button 98, a rearward button 100, and a memory button 102. Control panel 90 is suitably connected to CPU 88 via a lead 104.

In the use of the control pedal assembly, the control pedal assemblies may be adjusted fore and aft by an operator seated on seat 50 simply by pushing forward and rearward buttons 98 and 100 selectively until the control pedal assemblies assume the desired comfortable positions for the operator or, alternatively, the control pedal assemblies may be moved automatically to preset positions utilizing a remote transmitter 106 carried on the person of the operator and operative to transmit a signal 108 to receiver 86 having a code peculiar to the operator.

In the use of the remote transmitter 106 the seated operator moves the pedal assemblies to their desired positions using forward and rearward buttons 98/100 and thereafter presses memory button 102 so as to store a setting in the memory of the computer for that particular driver corresponding to settings of the control pedal assemblies accommodating that particular driver. Thereafter, as the driver approaches the vehicle, transmitter 106 may be utilized to transmit a signal to receiver 86 coded to signal the computer to access the computer memory setting for the respective driver and actuate the motor in a sense to move the pedal assemblies to the settings accommodating the respective driver.

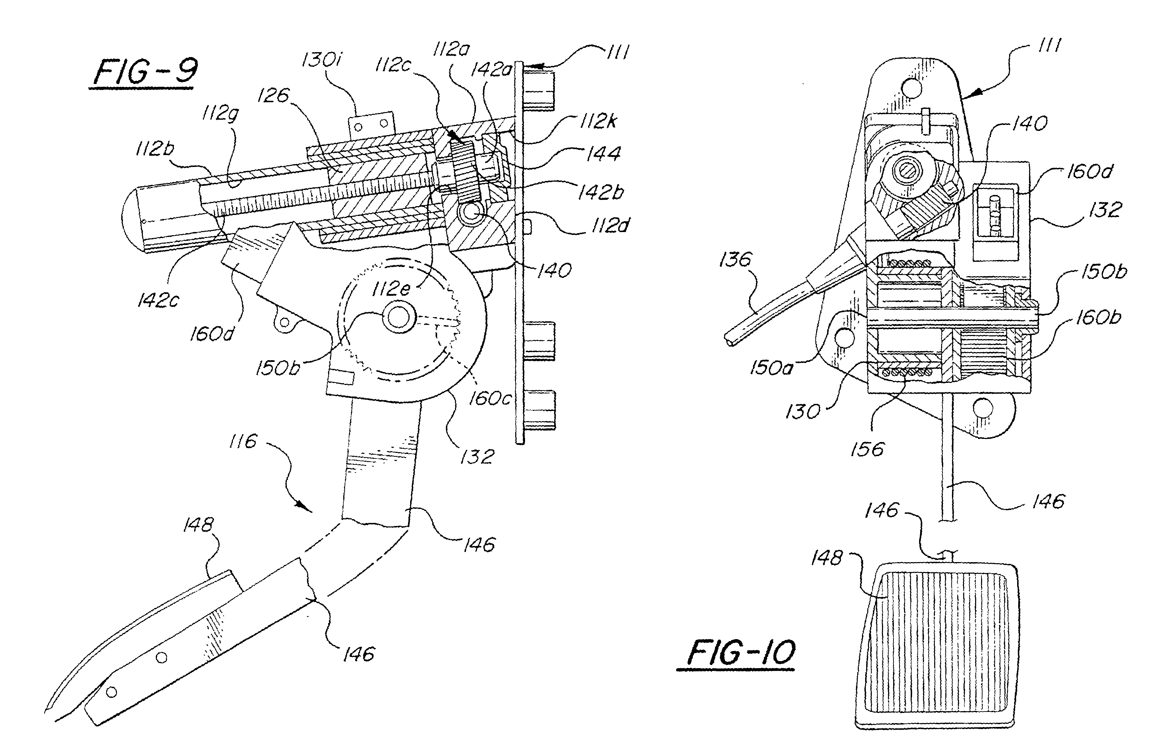

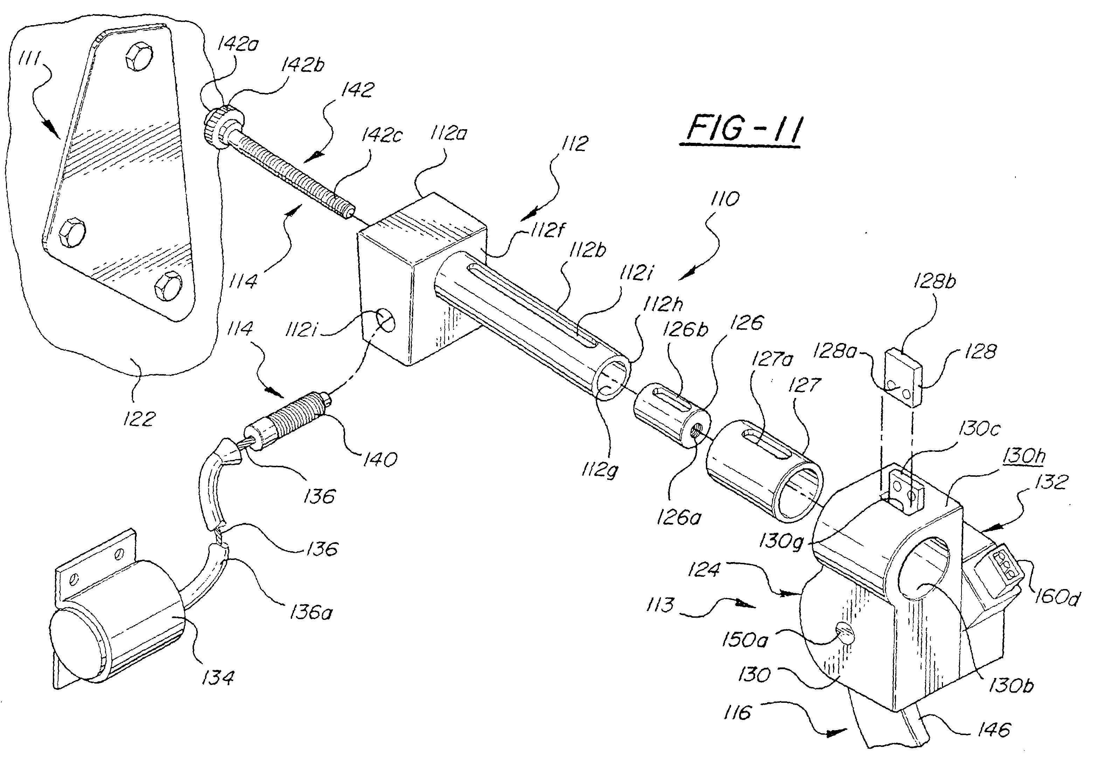

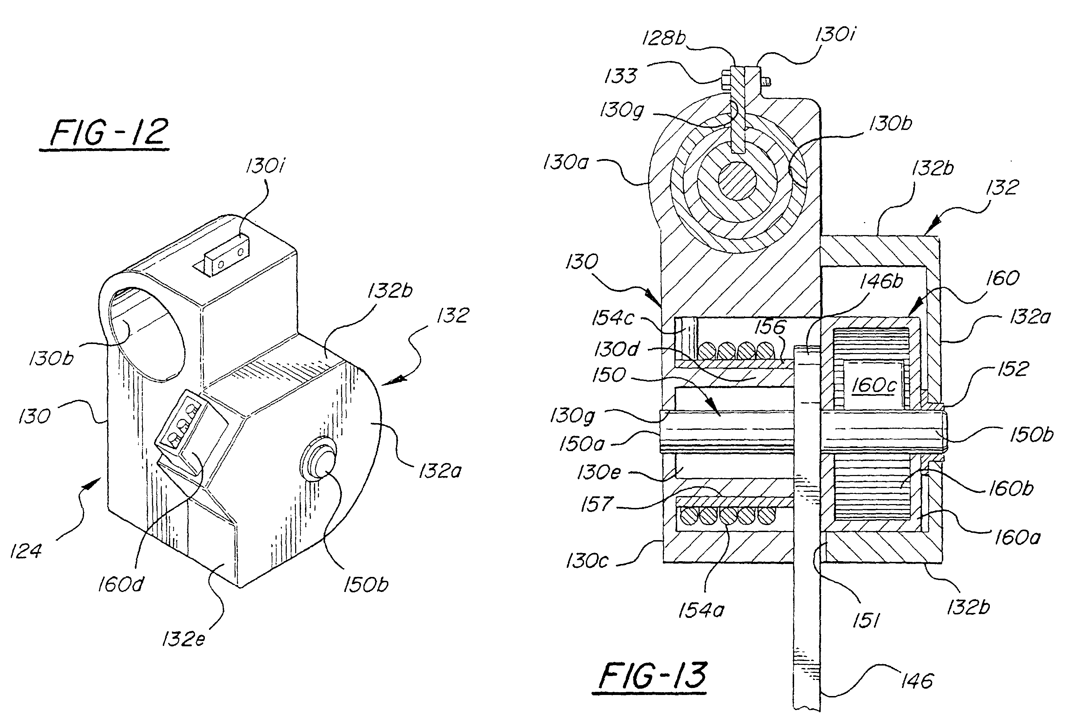

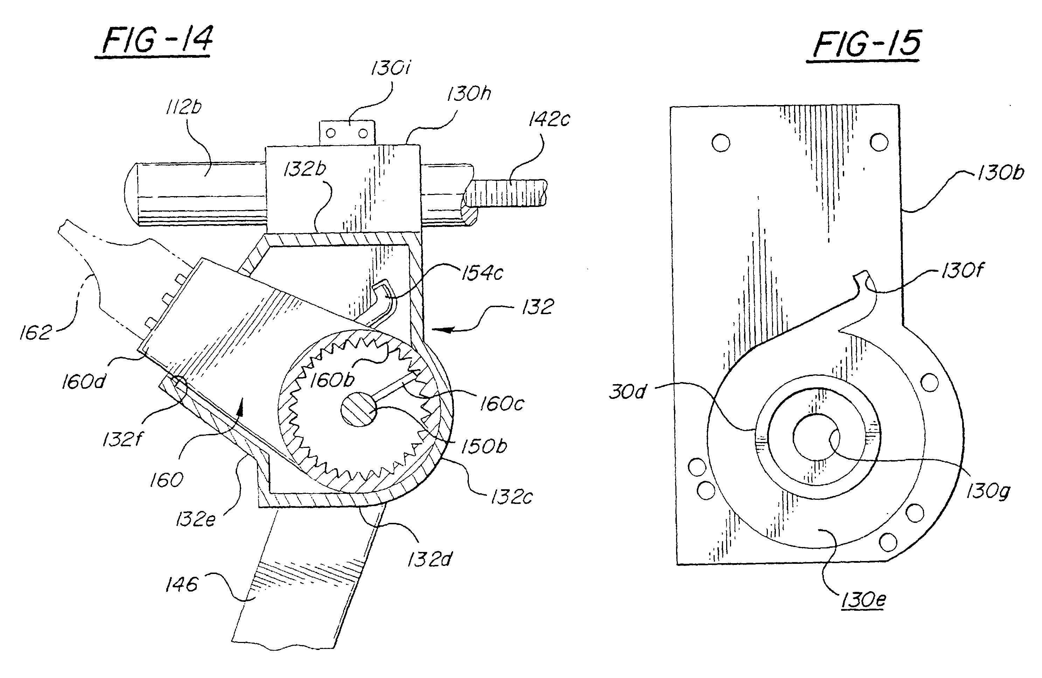

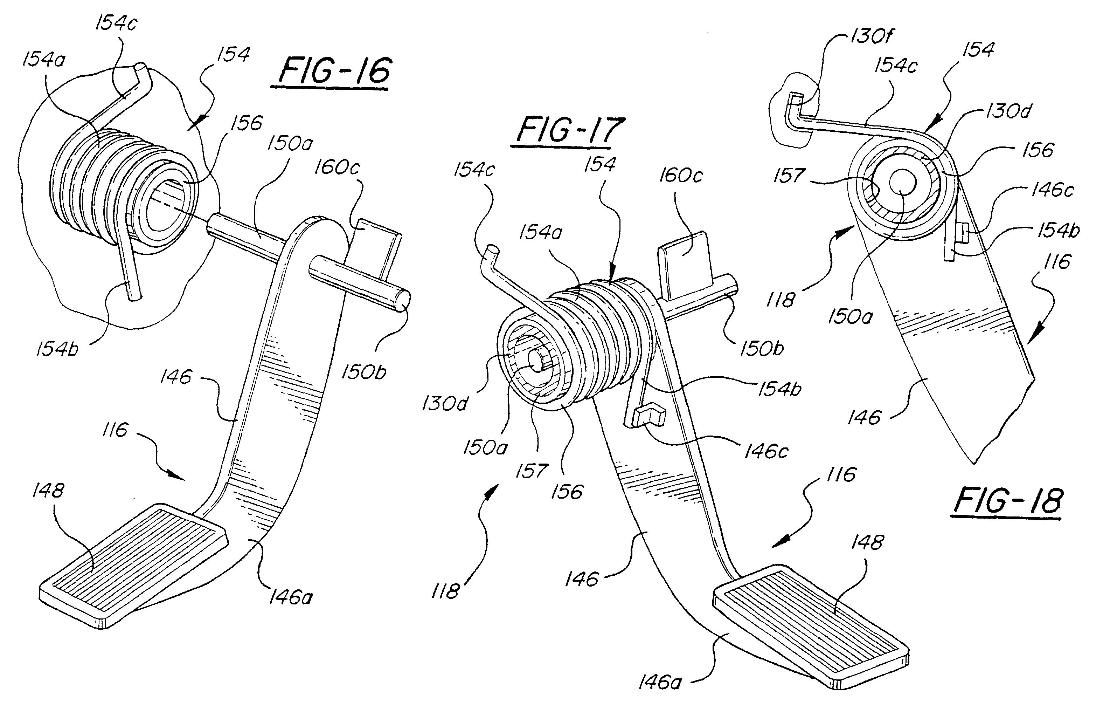

The second embodiment which is in accordance with the invention seen in Figures 9-18 will now be described. Accelerator pedal assembly 110 of the second embodiment, broadly considered, is intended to allow efficient fore and aft movement of the pedal assembly to accommodate operators of varying anatomical dimension and is operative to generate an electronic or drive-by-wire signal in response to pivotal movement of the pedal assembly while retaining the same ergometric operation of the pedal irrespective of the position of adjustment of the pedal.

Pedal assembly 110 includes a mounting bracket 111, a guide structure 112, a carrier assembly 113, a drive assembly 114, a pedal assembly 116, a resistance assembly 118, and a generator means 120.

Mounting bracket 111 is adapted to be suitably secured to the dash panel 122 of the associated motor vehicle, utilizing suitable fastener means, in known manner.

Guide structure 112 includes a transmission housing portion 112a and a guide rod portion 112b. Transmission housing portion 112a is suitably secured to and extends rearwardly from bracket 111 and has a generally cubicle configuration defining an axial bore 112c opening at the front face 112d of the housing portion and further defining a central bore 112e in a rear wall 112f of the housing portion concentric with bore 112c.

Guide rod portion 112b extends rigidly rearwardly from the rear wall 112f of the transmission housing portion, is hollow so as to provide a tubular configuration defining a central circular axial bore 112g concentric with bores 112c and 112e, is open at its rear end 112h, and includes an upper axial slot 112i extending from a location proximate the transmission housing wall 112f to a location proximate guide rod rear end 112h.

Carrier assembly 113 includes a housing 124, a nut 126, a bushing 127, and a key 128.

Housing 124 is designed to move slidably along the guide rod portion 112b of guide structure 112 and preferably is formed of left and right molded acetal plastic sections 130 and 132 which are suitably joined together along a vertical plane by the use of fasteners, heat sealing or other means.

Left housing section 130 includes an upper portion 130a defining a through axial bore 130b and a lower portion 130c defining an annular hub structure 130d and an annular spring chamber 130e in concentric surrounding relation to hub structure 130d and including a tail portion 130f.

Housing 124 is mounted on the guide rod portion 112b of guide structure 112 with bushing 127 positioned in bore 130b and guide rod portion 112b positioned slidably within bushing 127 so as to mount the housing for sliding movement along the guide rod.

Right housing section 132 is generally hollow and includes an outer side wall 132a, a top wall 132b, a front wall 130c, a bottom wall 130d, and an angled rear wall 132e defining an opening 132f.

Nut 126 is circular, preferably plastic, is mounted for sliding movement in circular bore 112g of guide rod 112b, and defines a central threaded bore 126a.

Key 128 is seated at its lower end 128a in a notch or pocket 126b in the upper periphery of nut 126 and passes upwardly through a slot 127a in bushing 127, through guide rod slot 112i, and through an opening 130g in the top wall 130h of left housing section 130 for securement at its upper end 128b, by fasteners 133, to a flange structure 130i upstanding from left housing section top wall 130h. Key 128 thus lockingly interconnects nut 126 and housing 124 so that movement of nut 126 in bore 112g is imparted to housing 124 so as to move housing 124 axially along guide rod portion 112b.

Drive assembly 114 includes a motor 134, a cable 136, a bracket 138, a worm 140, a worm gear 140, and an elongated drive member 142.

Motor 134 comprises a suitable electric motor, with position memory if required, and is suitably secured to dash panel 122 proximate bracket 111.

Cable 136 comprises a well-known Bowden cable and is drivingly secured at one end 136a to the output shaft of motor 134. The other end 136b of cable 136 is drivingly attached to worm gear 140.

Worm gear 140 is suitably journaled in an upwardly angled bore 112j in transmission housing 112a in angled underlying relation to bore 112c.

Drive member 142 includes a front journal portion 142a, a worm wheel 142b, and a rear screw shaft portion 142c. Drive member 142 is positioned within guide structure 112 with journal portion 142a journaled in a retainer 144 positioned in a counterbore 112k in the front end of transmission housing 112a, worm wheel 142b drivingly engaging worm gear 140, and screw shaft 142c extending rearwardly through bore 112e and centrally within guide rod structure 112b for threaded engagement with the threaded central bore 126a of nut 126. It will be seen that actuation of motor 134 has the effect of rotating screw shaft 142c to thereby move nut 126 and housing 124 fore and aft along guide rod 112b with the extent of forward and rearward movement defined and limited by engagement of key 128 with the front and rear ends of slot 112i.

Pedal assembly 116 includes a pedal arm 146, a pedal pad 148 secured to the lower end 146a of the pedal arm, and a pivot shaft 150. Pedal arm 146 passes upwardly through a slot 151 defined in housing 124 at the lower juncture of left and right housing sections 130 and 132. Pivot shaft 150 is fixedly secured to the upper end 146b of the pedal arm and includes a left portion 150a journaled in an aperture 130g in the outboard face of left housing section 130 concentrically within hub structure 130d and a right portion 150b journaled in side wall 132a of right housing section 132 utilizing a bushing 152.

Resistance assembly 118 includes the hub portion 130d of left housing section 130 arid further includes a coil spring 154 and a sleeve 156. Resistance assembly 118 is intended to provide feedback or "feel" to the operator to replace the feedback normally provided by the mechanical linkage interconnecting the accelerator pedal and the fuel throttle. With a mechanical linkage, the pedal pressure required when advancing the accelerator pedal is greater than that required to maintain a fixed position. This difference is often referred to as due to the hysteresis effect. This effect is important in maintaining the accelerator pedal in position while driving at a relatively constant speed and it must also be considered in achieving a desired deceleration time. The pressure which must be applied in accelerating is easily borne but if the back pressure of an accelerator spring produced the same effect during the time it was required to retain or maintain speed it would soon become uncomfortable for the operator to maintain a relatively constant speed. The hysteresis effect provides relief. It lessens the load required to maintain a setting of the accelerator yet there is still force to cause reverse pedal action when the foot applied pressure is removed. Resistance assembly 118 provides the "feel" of a mechanical linkage including the desired hysteresis effect to relieve operator fatigue.

Sleeve 156 may be formed, for example, of a Delrin® plastic material and is positioned with a friction fit over hub structure 130d to define an annular plastic-to-plastic frictional interface 157.

Spring 154 comprises a helical spring and is preferably formed of a suitable ferrous material. Spring 154, in addition to the primary convolutions 154a, includes a pedal tail portion 150b and a housing tail portion 150c. Spring 154 is positioned in spring chamber 130e with the primary convolutions 154a in tight, surrounding relation to sleeve 156, pedal tail portion 154 engaging a tab 146c struck from pedal arm 146, and housing tail portion 154c positioned in the tail portion 130f of spring chamber 130e.

Generator means 120 comprises a potentiometer 160 positioned within the hollow of right housing section 132 and suitably secured to housing side wall 132a. Potentiometer 160 includes a central shaft, constituted by pivot shaft portion 150b, a housing 160a concentric with shaft portion 150b, a plurality of resistance elements 160b mounted circumferentially around the inner periphery of housing 160a in side-by-side relation, a wiper arm 160c mounted on shaft portion 150b and operative to electrically slidably engage the resistance elements 160b in response to pivotal movement of shaft 150, and an outlet 160d projecting rearwardly through opening 132f in right housing rear wall 132e and electrically connected to wiper 160c and resistance elements 160b in a manner such that the electrical signal appearing at the outlet 160d varies in proportion to the extent of pivotal movement of pivot shaft 150. It will be seen that pivotal movement of pedal assembly 116 has the effect of rotating pivot shaft portion 150b and thereby varying the electrical signal appearing at the potentiometer outlet 160d so that the signal appearing at outlet 160d is at all times proportioned to and indicative of the pivotal position of the pedal. It will be understood that electric power is suitably supplied to potentiometer 160 and an electrical conduit 162 is suitably connected to potentiometer outlet 160d and extends to the vehicle function or accessory, such as the vehicle throttle, that is being electrically controlled by the pedal assembly.

In the operation of the embodiment of the invention adjustable pedal assembly, the position of pedal pad 148 relative to the operator is selectively adjusted by selectively energizing motor 134 to selectively move nut 126 forwardly and rearwardly within guide rod bore 112g and thereby, via key 128, move the pedal assembly selectively forwardly and rearwardly along guide rod 112b with the limits of forward and rearward movement determined by engagement of key 128 with the respective forward and rearward ends of slot 112i. In any position of adjustment of the pedal, actuation of the pedal or release of the pedal results, in the manner previously described, in the generation of an output signal at the outlet 160d proportioned to the extent of pivotal movement. Since the pivotal movement of the pedal arm is precisely the same in any position of adjustment of the pedal structure, the ergometrics of the assembly do not vary irrespective of the position of adjustment of the pedal assembly and irrespective of the anatomical stature of the operator.

As the pedal is moved downwardly, a "feel" is imparted to the pedal, simulating the feel of a mechanical linkage between the pedal and the controlled vehicle system, by the combined effect of torsioning of the coil spring 154 and frictional sliding or wiping engagement between sleeve 156 and hub structure 130d at frictional interface 157. That is, as force is applied to move the pedal downwardly, the feel imparted is additive and is equal to the combined torsional resistance of spring 154 and the frictional resistance generated at annular interface 157 between sleeve 156 and hub structure 130d. It will be seen that just as the torsional resistance provided by spring 154 increases in proportion to the extent of downwardly pivotal pedal movement, so also does the frictional resistance at interface 157 progressively increase due to the progressively greater squeezing force exerted on sleeve 156 by the progressively tightening spring 154. As the pedal is thereafter released or allowed to return under the impetus of spring 154, the gradually decreasing frictional force at interface 157 becomes subtractive rather than additive with respect to the gradually decreasing torsional spring force, thereby creating the desired hysteresis effect. The amount of feel imparted to the pedal can thus be precisely adjusted by adjusting the spring rate or other parameters of spring 154, and/or by adjusting the materials or other parameters of sleeve 156 and hub structure 120d, thereby rendering it relatively easy to fine tune the system to achieve any desired feel and any desired hysteresis effect.

The invention adjustable control pedal apparatus will be seen to have many important advantages. Specifically, the design and structure of the pedal assembly facilitates the ready manufacture of each element of the pedal assembly and facilitates the ready assembly of the various elements, thereby reducing the overall cost of the total assembly. Further, the invention pedal assembly design requires fewer parts than prior art designs, provides a better running fit for the assembly, and enhances the ability to hold manufacturing and assembly tolerances.

Whereas preferred embodiments of the invention have been illustrated and described in detail, it will be apparent that various changes may be made in the disclosed embodiments without departing from the scope of the invention.

## Claims

1. An adjustable electronic pedal assembly adapted to be mounted on a body structure of a motor vehicle and operative to generate a variable electronic control signal to control a vehicle system, and assembly comprising:
a carrier;
a support structure mounting said carrier for fore and aft movement relative to the vehicle structure;
a drive assembly for providing said fore and aft movement of said carrier along said support structure;
a pedal arm having a lower end and a pad support on said lower end, said pedal arm extending from said lower end to a pivot connected directly to said carrier for pivotal movement of said pivot arm relative to said carrier and moveable to various adjusted position with said fore and aft movement of carrier relative to said support structure; generator means mounted on said carrier for movement with said carrier between said fore and aft positions and having an input responsive to said pedal arm pivot movement and an output adapted to be associated with the vehicle system, said generator means operative in response to said pivotal movement of said pedal arm relative to said carrier to generate an electric control signal from said output which varies in magnitude in proportion to said input by the extend of movement of said pedal arm relative to said carrier whereby the control signal is proportioned to and indicative of the pivotal position of the pedal arm relative to the carrier.

2. An assembly as set forth in claim 1 wherein said carrier includes a housing and said pedal arm has a pivot shaft pivotally supported in said housing.

3. An assembly as set forth in claim 1 including a spring member actuated by said pedal arm to react against said housing to provide a hysteresis effect.

4. An assembly as set forth in claim 1 wherein said generator means includes a potentiometer mounted on said carrier and said output of said potentiometer varies in magnitude in proportion to said input by said pivotal movement of said pedal arm relative to said carrier.

5. An assembly as set forth in claim 4 wherein said carrier includes a housing and said potentiometer is mounted in said housing with said pedal arm pivotally connected to said input of said potentiometer and supported by said housing.

6. An assembly as set forth in claim 1 wherein said carrier includes a slide and said support structure includes a guide slideably connected to said slide, said carrier includes said drive assembly for providing fore and aft movement of said carrier along said guide to adjust the position of said pivot.

7. An assembly as set forth in claim 6 wherein said carrier defines a smooth bore and a threaded bore, said guide including a guide rod slidably disposed in said smooth bore, and said drive assembly includes a screw shaft threadedly engaging said threaded bore.

8. An assembly as set forth in claim 7 wherein said carrier includes a nut slidably disposed in said smooth bore of said guide rod whereby said nut moves said carrier along said guide rod in response to rotation of said screw shaft.

9. An assembly as set forth in claim 8 including a spring resistance member reacting between said pedal arm and said carrier to provide a pedal return force.

## Patentansprüche

1. Einstellbare elektronische Pedalanordnung, die für die Anbringung an einer Karosseriekonstruktion eines Kraftfahrzeugs ausgebildet ist sowie betriebsmäßig zum Erzeugen eines variablen elektronischen Steuersignals zum Steuern eines Fahrzeugsystems ausgebildet ist, wobei die Anordnung folgendes aufweist:
einen Träger;
eine Abstützkonstruktion, mit der der Träger nach vorne und hinten beweglich relativ zu der Fahrzeugkonstruktion angebracht ist;
eine Antriebsanordnung, um für die Bewegung des Trägers nach vorne und nach hinten längs der Abstützkonstruktion zu sorgen;
einen Pedalarm mit einem unteren Ende und einer Flächenabstützung an dem unteren Ende, wobei sich der Pedalarm von dem unteren Ende zu einer Schwenkeinrichtung erstreckt, die für eine Schwenkbewegung des Schwenkarms relativ zu dem Träger direkt mit dem Träger verbunden ist sowie mittels der Vorwärts- und Rückwärtsbewegung des Trägers relativ zu der Abstützkonstruktion in verschiedene Einstellpositionen beweglich ist;
eine Generatoreinrichtung, die an dem Träger angebracht ist, um sich zusammen mit dem Träger zwischen der nach vorne und der nach hinten bewegten Position zu bewegen, und die einen auf die Schwenkbewegung des Pedalarms ansprechenden Eingang sowie einen Ausgang aufweist, der sich dem Fahrzeugsystem zuordnen läßt, wobei die Generatoreinrichtung betriebsmäßig dazu ausgebildet ist, ansprechend auf die Schwenkbewegung des Pedalarms relativ zu dem Träger ein elektrisches Steuersignal an dem Ausgang zu erzeugen, das sich um das Ausmaß der Bewegung des Pedalarms relativ zu dem Träger größenmäßig proportional zu dem Eingang ändert, so daß das Steuersignal proportional zu der Schwenkposition des Pedalarms relativ zu dem Träger ist und diese Schwenkposition anzeigt.

2. Anordnung nach Anspruch 1,
wobei der Träger ein Gehäuse aufweist und der Pedalarm eine in dem Gehäuse schwenkbar gelagerte Schwenkachse aufweist.

3. Anordnung nach Anspruch 1,
mit einem Federelement, das von dem Pedalarm betätigt wird, um gegen das Gehäuse zu wirken und damit einen Hystereseeffekt zu schaffen.

4. Anordnung nach Anspruch 1,
wobei die Generatoreinrichtung ein Potentiometer aufweist, das an dem Träger angebracht ist, und wobei der Ausgang des Potentiometers größenmäßig proportional zu dem Eingang aufgrund der Schwenkbewegung des Pedalarms relativ zu dem Träger variiert.

5. Anordnung nach Anspruch 4,
wobei der Träger ein Gehäuse aufweist und das Potentiometer in dem Gehäuse angebracht ist, wobei der Pedalarm mit dem Eingang des Potentiometers schwenkbar verbunden ist sowie von dem Gehäuse abgestützt ist.

6. Anordnung nach Anspruch 1,
wobei der Träger ein Gleitstück aufweist und die Abstützkonstruktion eine Führung aufweist, die mit dem Gleitstück verschiebbar verbunden ist, wobei der Träger die Antriebsanordnung aufweist, um für die Vorwärts- und Rückwärtsbewegung des Trägers längs der Führung zu sorgen, um die Position der Schwenkeinrichtung einzustellen.

7. Anordnung nach Anspruch 6,
wobei der Träger eine glatte Bohrung und eine Gewindebohrung aufweist,
wobei die Führung eine Führungsstange aufweist, die in der glatten Bohrung verschiebbar angeordnet ist, und wobei die Antriebsanordnung eine Gewindewelle aufweist, die mit der Gewindebohrung in gewindemäßigem Eingriff steht.

8. Anordnung nach Anspruch 7,
wobei der Träger eine Mutter aufweist, die in der glatten Bohrung der Führungsstange verschiebbar angeordnet ist, so daß die Mutter in Abhängigkeit von einer Rotation der Gewindewelle den Träger längs der Führungsstange bewegt.

9. Anordnung nach Anspruch 8,
mit einem Federwiderstandselement, das zwischen dem Pedalarm und dem Träger wirkt, um eine Pedalrückstellkraft zu liefern.

## Revendications

1. Ensemble électronique de pédale réglable prévu pour être monté sur une carrosserie d'un véhicule à moteur et pour générer un signal électronique de commande variable afin de commander un système du véhicule, et ensemble comprenant :
- un support ;
- une structure de montage portant ledit support pour un déplacement d'avant en arrière par rapport à la structure du véhicule ;
- un ensemble d'entraînement pour créer ledit déplacement d'avant en arrière dudit support le long de ladite structure de montage ;
- un bras de pédale possédant une extrémité inférieure et un support de patin sur ladite extrémité inférieure, ledit bras de pédale s'étendant de ladite extrémité inférieure vers un pivot directement connecté audit support pour un pivotement dudit bras de pivot par rapport audit support et mobile sur diverses positions réglées avec ledit déplacement d'avant en arrière du support par rapport à ladite structure de montage ;
- un moyen de générateur monté sur ledit support pour un déplacement avec ledit support entre lesdites positions d'avant en arrière et possédant une entrée sensible au pivotement dudit bras de pédale et une sortie prévue pour être associée au système du véhicule, ledit moyen de générateur fonctionnant en réponse audit pivotement dudit bras de pédale par rapport audit support pour générer un signal de commande électrique à partir de ladite sortie, variant en amplitude proportionnellement à ladite entrée selon l'amplitude de déplacement dudit bras de pédale par rapport audit support, le signal de commande étant ainsi proportionnel et indiquant la position en pivotement du bras de pédale par rapport au support.

2. Ensemble selon la revendication 1, dans lequel ledit support comprend un boîtier et ledit bras de pédale possède un axe de pivotement supporté, de façon pivotante, dans ledit boîtier.

3. Ensemble selon la revendication 1, comprenant une pièce de ressort actionnée par ledit bras de pédale pour réagir à l'encontre dudit boîtier afin de produire un effet d'hystérésis.

4. Ensemble selon la revendication 1, dans lequel ledit moyen de générateur comprend un potentiomètre monté sur ledit support et ladite sortie dudit potentiomètre varie en amplitude de façon proportionnelle à ladite entrée selon ledit pivotement dudit bras de pédale par rapport audit support.

5. Ensemble selon la revendication 4, dans lequel ledit support comprend un logement et ledit potentiomètre est monté dans ledit logement, ledit bras de pédale étant connecté, de façon pivotante, à ladite entrée dudit potentiomètre et étant supporté par ledit logement.

6. Ensemble selon la revendication 1, dans lequel ledit support comprend une glissière et ladite structure de montage comprend un guide connecté, de façon coulissante, à ladite glissière, ledit support comprenant ledit ensemble d'entraînement pour créer le déplacement d'avant en arrière dudit support le long dudit guide afin de régler la position dudit pivot.

7. Ensemble selon la revendication 6, dans lequel ledit support défini un alésage lisse et un alésage taraudé, ledit guide comprenant une tige de guidage coulissante dans ledit alésage lisse et ledit ensemble d'entraînement comprend un arbre à vis sans fin s'engageant dans ledit alésage taraudé.

8. Ensemble selon la revendication 7, dans lequel ledit support comprend un écrou coulissant dans ledit alésage lisse de ladite tige de guidage, ledit écrou déplaçant ainsi ledit support le long de ladite tige de guidage en réponse à une rotation dudit arbre à vis sans fin.

9. Ensemble selon la revendication 8, comprenant une pièce de résistance à ressort réagissant entre ledit bras de pédale et ledit support pour fournir une force de retour de pédale.
